# EUROPEAN PATENT SPECIFICATION

(11) **EP 2 312 275 B1**
(45) Date of publication and mention of the grant of the patent: **18.07.2018**
(21) Application number: 09172431.0
(22) Date of filing: 07.10.2009
(51) Int. Cl.: G01D 5/353

(54) **Method for providing a fibre optic sensor**
Verfahren zur Bereitstellung eines Glasfasersensors
Procédé pour fournir un capteur à fibre optique

(43) Date of publication of application: 20.04.2011
(73) Proprietor: Optoplan AS, 7075 Tiller (NO)
(72) Inventor: Furuhaug, Roar, N-7032 Trondheim (NO); Berg, Arne, N-7082 Kattem (NO)
(74) Representative: Berthier, Karine

(56) References cited:
- GB-A- 2 437 839
- GB-A- 2 437 840
- US-A1- 2008 232 748

## Description

### FIELD OF THE INVENTION

The present invention is related to the manufacturing of fibre optic sensors in general and in particular to the manufacturing of seismic sensors for use in seismic surveying activities in subsea environments.

### BACKGROUND OF THE INVENTION

In the field of fibre optic sensing it is now common to package a plurality of individual fibre optic sensor elements together, for example as exemplified by the seabed seismic station package of US patent no. 7,551,517. In that solution three fibre optic accelerometers and one hydrophone is packaged into a seismic station.

International patent application publication WO 2007/042761 to Qinetiq Limited discloses a fibre-optic package which typically comprises two or more fibre optic accelerometers coupled together by fused-fibre coupling. A method of fabricating a fibre-optic package is also disclosed in which a step in the method is to form first, second and third individual fibre-optic accelerometers from a single optical fibre without the need for fibre-fusion splices between the sensors.

It is a feature of the WO 2007/042761 solution that the optical fibre is coiled onto accelerometer parts having cylinders which are mounted onto a pin and where the cylinders are included in the assembly of the accelerometer.

It is another important feature of the disclosed solution in WO 2007/042761 that fused-fibre couplers is used to connect the individual fibre-optic sensor units, e.g. the individual accelerometers.

The use of fused-fibre couplers is undesirable for a number of reasons, because couplers are both a source of signal loss and the use of couplers complicate the manufacturing process and sensor packaging. Hence it is desirable to provide manufacturing methods which can at least reduce, or eliminate the use of couplers between individual sensors in fibre optic sensor stations having several individual fibre sensors.

The present applicants have in previous UK patent applications GB2437840A and GB2437839 described an ocean bottom fibre optic seismic sensing system and a fibre optic sensor station, respectively, wherein a sensor station is described to incorporate a plurality of sensors. From the state-of-the-art it is clearly of interest to provide efficient and practical methods of assembling sensor stations and producing ocean bottom seismic cables containing a large number of seismic stations.

It would be of interest to have a way of manufacturing a number of fibre-optical sensors for sensor stations in a reliable, efficient and simple way. This is particularly relevant in high-volume applications such as seismic sensor applications in which a large number of sensor elements are connected to form a seismic sensing system used to collect seismic data in surveying or monitoring operations. In such applications it is also desirable to avoid the use of fibre couplers and minimize the number of fibre fusion splices in order to provide for a simplified manufacturing process.

### SUMMARY OF THE INVENTION

According to the present invention the above objectives are met by providing a method for providing a fibre optic sensor in which a temporary stack including two or more sensor elements are assembled. The invention is characteristic in that the temporary stack is assembled by building from a stack foot and that the stack is held together by compression using a compression device thereby avoiding the use of through-going or continuous elements in the stack. A sensor element is defined as a sensor unit without a fibre sensor coil, while a sensor unit comprises the optical fibre and all other components making up a unit capable of operating as a sensor when mounted in its intended locations in a mounting structure, such as, for example a sensor housing. A continuous optical fibre is coiled onto the two or more sensor elements so as to form multiple sensor units. The temporary stack and the sensor units are then disassembled to allow for a rearrangement of the sensor units. The sensor units are subsequently mounted on a mounting structure so as to provide a multi-unit fibre optic sensor. It is an important effect of this method that the optical fibre is coiled onto completed accelerometer elements (without fibre) that do not need any through holes for mounting purposes. The method according to the invention allows the sensor units to be completely assembled prior to the coiling/wrapping of the optical fibre. This means that the production is simplified and a mechanical calibration step may be performed on the assembled sensor prior to winding the optical fibre.

Embodiments of the method according to the invention comprise the wrapping sections of the optical fibre onto sensor holders, each sensor holder being prearranged in the stack so as to separate the sensor elements and other components of the stack during the coiling of the fibre.

where each sensor holder is prearranged in the stack so as to separate two adjacent sensor elements from each other and from the other components of the stack during the coiling of the fibre.

In further embodiment of the method according to the invention comprises rotating the stack around a longitudinal axis while coiling the optical fibre onto the two or more sensor elements.

In yet further embodiments the method according to the invention comprises rotating a fibre supply unit a multiple number of rotations around a longitudinal axis of the stack while coiling the optical fibre onto the sensor elements.

In still further embodiments of the method according to the invention a fibre supply unit is translated in parallel with a longitudinal axis of the stack, while the stack is being rotated around its longitudinal axis.

In yet further embodiments the method according to the invention comprises providing the optical fibre with fibre Bragg gratings (FBG), preferably prior to the coiling onto the stack, and alternatively after the coiling step.

The method according to the invention may comprise attaching the optical fibre to the sensor elements at selected locations along the optical fibre. The optical fibre is preferably attached at preselected locations on the sensor elements with the FBGs at chosen locations.

In the method according to the invention the assembly of a temporary stack may include the assembly of a reference element. The coiling step then includes the coiling of the optical fibre onto the reference element.

In the method according to the invention the assembly of the stack may comprise arranging accelerometer elements in the same orientation or in different orientations around a common longitudinal axis.

In the method according to the invention the sensor units of a temporary stack comprise three accelerometer units and a hydrophone unit, and the completed multi-element fibre optic sensor comprises a three-axis fibre optic accelerometer and a hydrophone. The temporary stack may also comprise a reference element and the completed sensor may correspondingly comprise a reference unit. Further, in the method according to the invention comprises the step of attaching the optical fibre at entry and exit positions on each sensors, using one or more of a group of attachment means comprising a glue, a tape, a sticky material, a clip, a clamp or similar locking, gripping or attaching element.

In the method according to the invention the stack is held together by compression using a compression device (101,110, 112-114, 116-117), thereby avoiding the use of through-going or continuous elements in the stack.

In another aspect of the invention there is provided a stack for use in the manufacturing of a fibre optic sensor including multiple sensor elements. The stack comprises an assembly of two or more sensor elements and several sensor holders. The assembly is characteristic in that it is built on a on a stack foot and is clamped together by a clamp.

In embodiments of the stack according to the invention the sensor elements and the sensor holders are designed so as to be separable in a rotational movement to avoid straining the coiled fibre during disassembly of the stack. This may be achieved by providing suitable functionality in the mechanical interface between two adjacent sensor holders and other components of the stack, the interface comprising for example suitably shaped sensor slots and corresponding pins.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described below, by way of example only, with reference to the drawings, in which
- FIG. 1: illustrates an example embodiment of a temporary stack according to the invention after the step of assembling the stack and during the coiling step of the method according to the invention, and where the stack includes four sensor elements, and a reference element (of which two are completed sensor units and one is a completed reference unit with optical fibre) and an optical fibre during coiling onto the stack.
- FIG. 2: shows an exploded view of the temporary stack of FIG. 1.
- FIG. 3: shows how an example embodiment of a temporary stack according to the invention as mounted in a coiling station.
- FIG. 4: illustrates how the stack may be assembled and disassembled.
- FIG. 5: illustrates the step of the method according the invention in which the completed sensor units are assembled in a mounting structure so as to provide a multi-element fibre optic sensor.

### DESCRIPTION OF EMBODIMENTS OF THE INVENTION

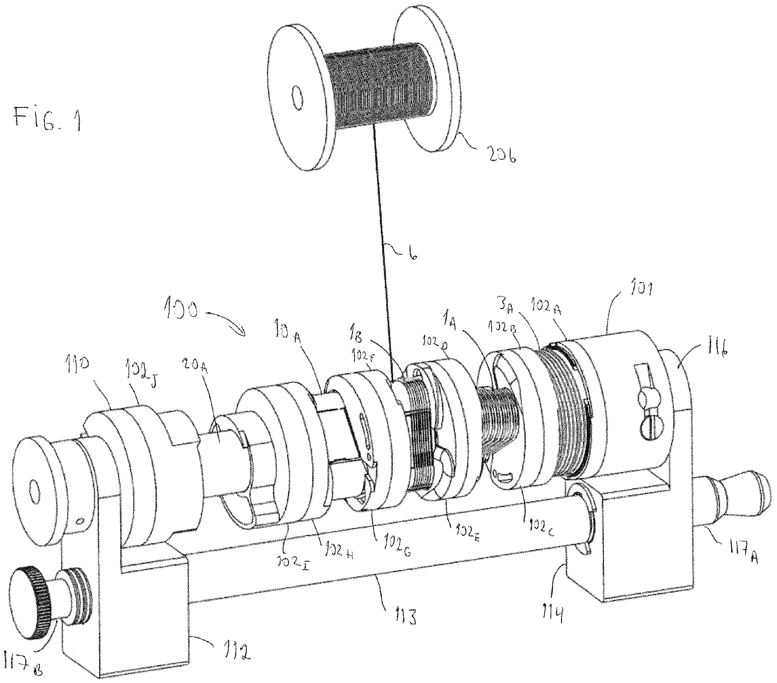

FIG. 1 illustrates a temporary stack 100 after assembly including the following main components: four sensor elements (three accelerometer elements 10_{A-C} and one hydrophone element 20_{A}), two completed sensor units 1_{A-B}, a reference element 3_{A}. It is also illustrated how an optical fibre 6 is coiled onto the components of the temporary stack 100. After completing the coiling step complete sensor units 1-3 and reference unit 3_{A} are ready to be disassembled from the temporary stack 100.

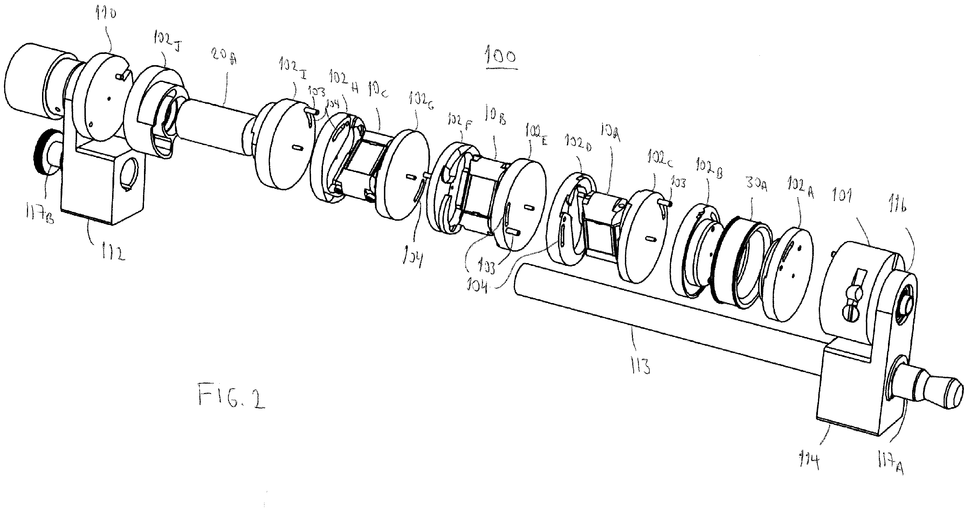

On FIG. 1 there is also indicated an optical fibre 6 and an optical fibre supply coil 206 for supplying the optical fibre 6 that is to be coiled onto the temporary stack 100. Referring to FIG. 2, it will be described how a temporary stack may be assembled. FIG. 2 shows en exploded view of a temporary stack 100 with four sensor elements (three accelerometer elements 10_{A-C} and one hydrophone element 20_{A}) and one reference element 30_{A}, The temporary stack 100 is assembled by building from a stack foot 101. The stack foot 101 may be placed on a table in an upright fashion so that the stack may be built in a vertical fashion. On the stack foot 101 there is placed a sensor holder 102_{A}. On the sensor holder 102_{A} a reference element 30_{A} is placed. The sensor holder 102_{A} and a reference element 30_{A} are provided with steering flanges to steer a rotational movement and end stops so as to stop the rotation of the sensor holder 102_{A} with respect to the reference element 30_{A} at the correct position. Next a second sensor holder 102_{B} is placed on the reference element 30_{A}. The pair of sensor holders 102_{A,B} provides a holding function for holding the reference element 30_{A} in the temporary stack. A third sensor holder 102_{C} is placed on the sensor holder 102_{B} on which a sensor element 10_{A}, for example an accelerometer element, is placed. On the sensor element 10_{A} a fourth sensor holder 102_{B} is placed. The pair of sensor holders 102_{C,D} contains the position of the sensor element 10_{A} in the temporary stack. Second 10_{B} and third 10_{C} sensor elements are arranged in the same way in consecutive manner on the stack, the sensor elements 10_{B,C} being contained by pairs of sensor holders 102_{E,F}, 102_{G,H}, respectively. Yet another pair of sensor holders 102_{I,J} contains a hydrophone element 20_{A}. Finally a stack top 110 is arranged on the last sensor holder 102_{J}. A combination of steering flanges and end stops are used on the elements of the temporary stack in order to ensure correct placement of the parts with respect to each other.

This way an assembly of two or more sensor elements 10_{A,B} and a reference element 30_{A}, each contained by several, corresponding pairs of sensor holders 102_{A,B}, 102_{C,D} etc. have been provided. According to the invention, this assembly is clamped together by a clamp device 112-116, for example in the form of a fork structure to complete the stack. A fork structure 112-117 is mounted with each of two legs 115,116 arranged on the stack foot 101 and stack top 110, respectively. The fork structure 112-116 is provided with a tightening device 117 to enable the stack to be pressed together from the foot 101 and top 110 ends. The fork legs are joined by a joining element 113, for example a cylindrical rod. When the fork element 112,113,114 has been tightened, the sensor elements and sensor holders are effectively held in position with respect to each other. Thus a temporary stack 100 has been formed.

A step in the preparation of the stack is to ensure that the stack is held together. This is achieved by compressing the stack from both ends. A suitable arrangement of the previously mentioned components 101,110, 112-114, 116-117 form a compression device thereby avoiding the use of any through-going or continuous elements running through the whole length of the stack.

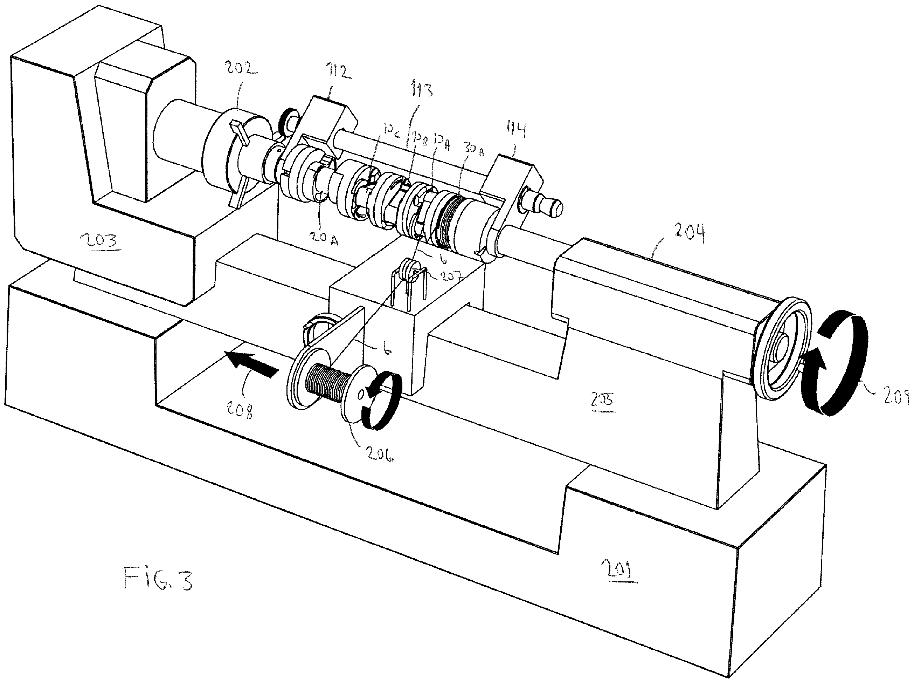

Turning now to FIG. 3, there is illustrated how the temporary stack 100 may be mounted in a coiling station 200 for performing the fibre coiling operation.

Preferably the temporary stack is placed so as to arrange the stack foot 101 and stack top 110 adjacent respective stack holders 202,204 of the station 200. While the fork element is held in place the stack holders 202,204 are moved closer together so as to engage the stack foot 101 and stack top 110 to fix the position of the stack holders 202,204 with respect to the temporary stack 100. The optical fibre supply coil 206 may be mounted on a translation stage so that it may be translated with respect to a stationary temporary stack 100 while the temporary stack is being rotated 209.

Alternatively, the stack holders 202,204 are part of or mounted on respective movable station elements 203,205 in order that the stack holders 201,203 and the temporary stack 100 may moved in a translational manner on a station base 201. This way, the temporary stack 100 can be translated with respect to a stationary optical fibre coil 206, so that optical fibre may be coiled onto the various parts of the temporary stack 100 by translator movement of the stack holders 201,203.

In yet another alternative both the optical fibre supply coil 206 and the temporary stack 100 are movable. Between the fibre supply coil 206 and the temporary stack 100 there may be arranged a spindle device 207 for assisting in the steering and control of the optical fibre 6.

In a controlled operation, the optical fibre 6 may as explained above be coiled onto the temporary stack, including the sensor and reference elements. The coiling operation may be controlled using a computer based control system having a computer equipped with software for providing output signals to a motor or similar drive unit controlling the rotation of the temporary stack. The motor or similar drive unit will typically be a part of the coiling station 200. The computer containing the control software may be arranged a separate unit with an interface to the coiling station 200 or they may be an integrated part of the coiling station 200.

The coiling and gluing operation can be realised as an automatic process which is controlled by a computer (not shown) being appropriately connected to actuators and glue dispensers of the coiling station 200, as will be understood by a person skilled in the art. The coiling station typically includes an optical fibre tension control function. There are several ways of implementing the tension control function, one way being to measure the fibre strain and provide a feedback to a brake unit on the fibre supply coil 206. Throughout the coiling operation the occurrence of fibre overlap should be minimized, and any coiling should be uncoiled and recoiled if any undesired fibre overlap is detected or recorded. At the end of the coiling of the optical fibre the fibre is fixed, e.g with tape to the temporary stack in order to stay in position. At each end of the coiled fibre, pigtail ends are coiled with lengths suitable for cutting and splicing of the optical fibre to other optical fibres, e.g. the fibres in a sensor cable.

The accelerometers may be realised from a combination of a fixed cylinder and a moving cylinder upon which the optical fibre is coiled as for example as described in Great Britain patents no. 2422661, 2455931 and 2455930. Sections of tape (not illustrated) with adhesive on both sides may be attached at appropriate locations on the accelerometers to hold the fibre in position and prevent overlap and tangling of the optical fibre 6.Tape sections may be used in a similar manner on the reference element.

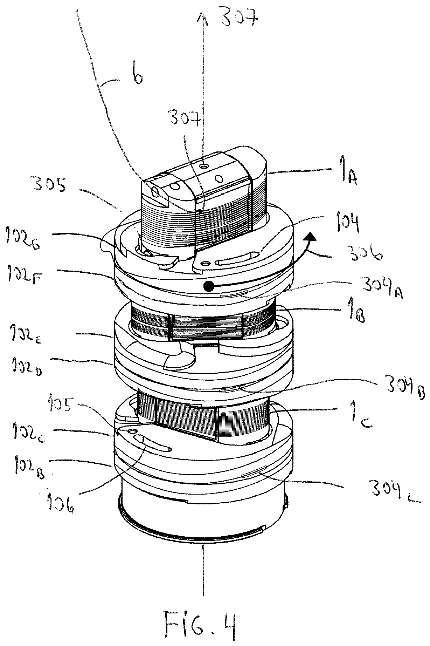

The method according to the invention may comprise the attachment of the optical fibre 6 at entry and exit positions 307 on each sensor unit, as indicated on FIG. 4. The attachment may be accomplished using attachment means such as a glue, a tape, a sticky material, a clip, a clamp or similar gripping or attaching element or combinations thereof.

The optical fibre is preferably fixed with glue, typically a UV curing adhesive at the positions where it enters and leaves the sensor elements (reference coil, accelerometers, and hydrophone). The glue points should be small, precise, and correctly located so as not to disturb the fibre coils and avoid gluing the fibre to the sensor holders. Soft silicone based glue is preferably placed over a fixing adhesive in order that the soft silicone may function as a pull-relieving device for the optical fibre. The glue locations should avoid the tape area.

The gluing step is preferably made after the completed coiling of the optical fibre onto the stack. This will allow fast and effective manufacturing where also the coiling can be completed in one, possibly automated, operation.

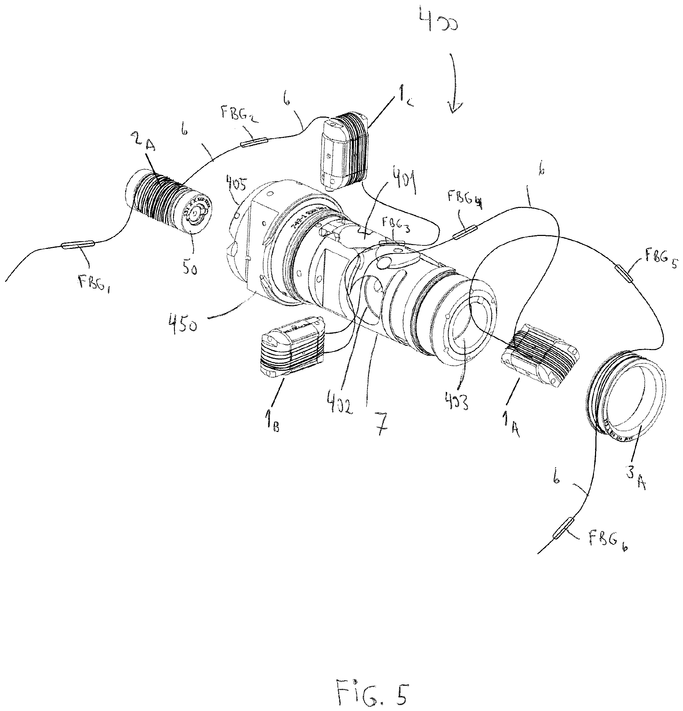

FIG. 4 illustrates the disassembly of the temporary stack 100 after completing the coiling process. After the coiling and gluing of the optical fibre 6 to the temporary stack 100, the sensor units 1,2, the reference unit 4 and the lengths of optical fibre with fibre Bragg gratings in between the units 1-4 are disassembled from the temporary stack as illustrated by the partly disassembled stack of FIG. 4. The sensor units are then preferably mounted directly into a sensor housing 7 as illustrated in FIG. 5. As an alternative the sensor and reference units may be temporarily placed in a container in a careful and systematic manner before being put into the sensor housing 7. The parts of the stack 100 are typically disassembled from the temporary stack 100 in the reverse order of the assembly operation.

FIG. 4 also illustrates that for the FBGs of the optical fibre there may be arranged corresponding labels 304_{A-C} on the temporary stack 100. Each FBG should end up on one of the labels 304 during the coiling operation. The label 304 is used to ensure that the coiling operation is working correctly. In a normal coiling operation each of the FBGs should end up on a corresponding label 304.

This can be achieved by providing an entry mark on the fibre at the start of the coiled fibre with a fixed, predetermined position relative to the fixed and predetermined FBG positions, where the entry mark must enter the first sensor holder at a fixed, predetermined position. By having a correct starting position of the fibre, all the FBGs should normally end up in their predetermined locations on the labels.

If an FBG ends up outside a corresponding label, this may be used as an indication of a variation or fault in the FBG/optical fibre or the sensor elements 10_{A-C} or the coiling program. The FBGs of the optical fibre 6 are normally indicated by master marks in the optical fibre. It is possible to check whether the FBG gratings are in their intended places by checking that the master marks are in the correct positions vis-à-vis the labels 304.

On FIG. 4 details of the sensor holders 102_{B-G} are shown for the purpose of illustrating that the components of the temporary stack are assembled and disassembled in a rotational movement with respect to the longitudinal axis of the stack. A sensor holder 102_{G} is provided with an elongated holder sensor slot 104 for partly allocating a pin 103 of an adjacent sensor holder 102_{F}. The sensor slot 104 is shaped so as to allow dismounting the sensor unit 1_{A} in a rotational movement in direction indicated by arrow 306 which loosens the coiled optical fibre on the sensor holders so as not to damage optical fibre. For this purpose the slot 104 is formed so as to allow some movement of a pin 103 which in an assembled stack protrudes into the slot 104, causing a rotation of the sensor unit 1_{A} around a longitudinal centre axis 307 of the stack and with respect to the adjacent sensor holders while they are being taken off the temporary stack 100. A similar principle for demounting may be used for all parts of the temporary stack 100 provided they are provided with details such as for example slots 104 and pins 103 allowing some rotational movement in the direction of the arrow 306 during disassembly. Such possibility for rotational movement between two adjacent sensor holders and other components of the stack for assembly and disassembly of the temporary stack may be provided by suitable functionality in the mechanical interface, such as for example suitably shaped sensor slots 104 and corresponding pins 103. The slots 104 are typically as wide of as the diameter of the pins 103 and as several times as long as the diameter of the pins.

FIG. 5 illustrates the step that the sensor and reference unitss1_{A-C} 2_{A},3_{A} that has been produced in the coiling of the optical fibre onto the temporary stack 100 after disassembly of the stack 100 are mounted in a sensor housing 7 or similar mounting structure so as to provide a multi-element fibre optic sensor. In this case three fibre optic accelerometers 1_{A-C}, a reference unit 3_{A} and a hydrophone 2_{A} are all mounted in a sensor housing 7, more particularly in a seismic sensor housing. In some embodiments of the method according to the invention the sensor and reference units are mounted on a mounting structure 7 which is subsequently mounted in a sensor housing. The three accelerometers are mounted in mutually orthogonal directions in three respective slots 401-403, so as to provide for three-axis sensing of acceleration in a seismic sensor.

In some embodiments of the invention the hydrophone unit 2_{A} may be produced in a separate coiling operation and be inserted between two optical fiber Bragg gratings FBG₁₋₂ by cutting the optical fibre and subsequently splicing in the hydrophone.

The hydrophone unit 2_{A} may be inserted axially into an end slot 405 of the mounting structure 7. The opening of the slot is indicated by numeral 405. A total of six fibre Bragg gratings FBG₁₋₆ are in this particular embodiment placed along the optical fibre 6, one FBG in front and one FBG following each of the accelerometer units 1_{A-C}, a reference unit 3_{A} and a hydrophone unit 2_{A}, as seen along the propagation path of the light in the optical fibre.

In the illustrated embodiment of the method for providing a fibre optic sensor according to the invention is particularly useful in the manufacture of ocean bottom seismic sensing systems in which a number of sensor stations or sensor houses are arranged along a long length of seismic cable, either as integrated parts of the seismic cable or as separate seismic stations.

In such applications it is important to obtain a reliable and repeatable coiling of an array of fibre gratings to sensor elements (reference coil and three accelerometers) to be mounted in ocean bottom seismic stations. This may be obtained using the method according to the present invention. The optical fibre with the FBGs (the optical loops) between sensor units are preferably organized on the sensor houses without straining the FBGs, hence avoiding wavelength shifts of the FBGs. This is typically obtained by wrapping the loops with FBGs on a surface of the mounting structure 7 or sensor housing without longitudinal strain in the optical fibre, that is a loose arrangement of the optical fibre, where the fibre is be bent, but not strained longitudinally, thus not affecting the FBGs.

While the invention has been illustrated and described in detail in the drawings and foregoing description, such illustration and description are to be considered as illustrative or exemplary and not restrictive; the invention is not limited to the disclosed embodiments but by the scope of the appended claims.

## Claims

1. A method for providing a fibre optic sensor (400) comprising
- assembling two or more sensor elements (10_{A-C}),
- coiling a continuous optical fibre (6) onto the two or more sensor elements (10_{A-C}) on the stack so as to form multiple sensor units (1_{A-C}, 2_{A}),
- disassembling the temporary stack (100) to liberate the sensor units (1_{A-C}, 2_{A}) from the stack and to allow rearrangement of the sensor units (1_{A-C}, 2_{A}), and
- subsequently mounting the sensor units(1_{A-C}, 2_{A}) in a mounting structure (7) so as to provide a fibre optic sensor (400) including multiple sensor units (1_{A-C}, 2_{A}), **characterized in that** the assembling of the sensor elements comprises assembling a temporary stack (100) by building from a stack foot (101) and holding the stack together by a compression device (101,110, 112-114, 116-117), thereby avoiding the use of through-going or continuous elements in the stack.

2. The method according to claim 1, comprising wrapping sections of the optical fibre (6) onto sensor holders (102_{C-J}), each sensor holder being prearranged in the stack (100) so as to separate the sensor elements (10_{A-C}) and other components (3_{A},101,110) of the stack (100) during the coiling of the fibre (6).

3. The method according to claim 1, comprising rotating the stack (100) around a longitudinal axis while coiling the optical fibre (6) onto the two or more sensor elements (10_{A-C}).

4. The method according to claim 1, comprising rotating a fibre supply unit (206) a multiple number of rotations around a longitudinal axis of the stack (100) while coiling the optical fibre (6) onto the sensor elements (10_{A-C}).

5. The method according to claim 1, comprising translating a fibre supply unit (206) in parallel with a longitudinal axis (307) of the stack (100) while the stack is being rotated around its longitudinal axis.

6. The method according to claim 1, comprising the step of providing the optical fibre (6) with fibre Bragg gratings (FBG) preferably prior to the coiling onto the stack, and alternatively after the coiling step.

7. The method according to claim 1, comprising attaching the optical fibre (6) to the sensor elements (10_{A-C}) at selected locations along the optical fibre (6).

8. The method according to claim 1, wherein the assembly of a temporary stack (100) includes a reference element (3_{A}), and wherein the coiling step includes coiling the optical fibre (6) onto the reference element (3_{A}).

9. The method according to claim 1, wherein the assembly of the stack (100) comprises arranging accelerometer elements (10_{A-C}) in a same orientation or in different orientations around a common longitudinal axis (307).

10. The method according to claim 1 wherein the sensor units (1_{A-C}) of a temporary stack comprise three accelerometer units and a hydrophone unit, and the completed multi-element fibre optic sensor (400) comprises a three-axis fibre-optic accelerometer and a hydrophone.

11. The method according to claim 1 comprising the step of attaching the optical fibre at entry and exit positions on each sensors, using one or more of a group of attachment means comprising a glue, a tape, a sticky material, a clip, a clamp or similar clasping or attaching element.

12. A stack for use in the manufacturing of a fibre optic sensor including multiple sensor elements, the stack comprising
- an assembly of two or more sensor elements (10_{A-C}) and several sensor holders (102_{C-J}),
**characterized in that**
- the assembly is built on a on a stack foot (101) and is clamped together by a clamp (112-116) thereby avoiding the use of through-going or continuous elements in the stack.

13. The stack according to claim 12, wherein the sensor elements (10_{A-C}) and the sensor holders (102_{C-J}) are designed so as to be separable in a rotational movement to avoid straining the coiled fibre during disassembly of the stack.

14. The stack according to claim 12, comprising suitable functionality in the mechanical interface between two adjacent sensor holders and other components of the stack, the interface comprising for example suitably shaped sensor slots 104 and corresponding pins 103.

## Patentansprüche

1. Verfahren zum Bereitstellen eines Faseroptiksensors (400) umfassend
- Zusammenbauen von zwei oder mehr Sensorelementen (10_{A-C}),
- Aufspulen einer kontinuierlichen optischen Faser (6) auf die zwei oder mehr Sensorelemente (10_{A-C}) auf dem Stapel, um mehrere Sensoreinheiten (1_{A-C}, 2_{A}) zu bilden,
- Auseinandernehmen des temporären Stapels (100), um die Sensoreinheiten (1_{A-C}, 2_{A}) aus dem Stapel freizugeben und eine Neuanordnung der Sensoreinheiten (1_{A-C}, 2_{A}) zuzulassen, und
- anschließendes Montieren der Sensoreinheiten (1_{A-C}, 2_{A}) in einer Montagestruktur (7), um einen Faseroptiksensor (400) mit mehreren Sensoreinheiten (1_{A-C}, 2_{A}) bereitzustellen, **dadurch gekennzeichnet, dass** das Zusammenbauen der Sensorelemente das Zusammenbauen eines temporären Stapels (100) durch Aufbauen ausgehend von einem Stapelfuß (101) und Zusammenhalten des Stapels durch eine Druckvorrichtung (101, 110, 112-114, 116-117) umfasst, wodurch die Verwendung durchgehender oder kontinuierlicher Elemente in dem Stapel vermieden wird.

2. Verfahren nach Anspruch 1, umfassend Wickeln von Abschnitten der optischen Faser (6) auf Sensorhalter (102_{C-J}), wobei jeder Sensorhalter im Voraus in dem Stapel (100) angeordnet ist, um die Sensorelemente (10_{A-C}) und andere Komponenten (3_{A}, 101, 110) des Stapels (100) während des Aufspulens der Faser (6) zu trennen.

3. Verfahren nach Anspruch 1, umfassend Drehen des Stapels (100) um eine Längsachse während des Aufspulens der optischen Faser (6) auf die zwei oder mehr Sensorelemente (10_{A-C}).

4. Verfahren nach Anspruch 1, umfassend Drehen einer Faserzuführeinheit (206) um mehrere Umdrehungen um eine Längsachse des Stapels (100) während des Aufspulens der optischen Faser (6) auf die zwei oder mehr Sensorelemente (10_{A-C}).

5. Verfahren nach Anspruch 1, umfassend Verlagern einer Faserzuführeinheit (206) parallel zu einer Längsachse (307) des Stapels (100), während der Stapel um seine Längsachse gedreht wird.

6. Verfahren nach Anspruch 1, umfassend den Schritt des Versehens der optischen Faser (6) mit Faser-Bragg-Gittern (FBG) vorzugsweise vor dem Aufspulen auf den Stapel und alternativ nach dem Aufspulschritt.

7. Verfahren nach Anspruch 1, umfassend Anbringen der optischen Faser (6) an den Sensorelementen (10_{A-C}) an ausgewählten Stellen entlang der optischen Faser (6).

8. Verfahren nach Anspruch 1, wobei das Zusammenbauen eines temporären Stapels (100) ein Referenzelement (3_{A}) beinhaltet und wobei der Aufspulschritt das Aufspulen der optischen Faser (6) auf das Referenzelement (3_{A}) beinhaltet.

9. Verfahren nach Anspruch 1, wobei das Zusammenbauen des Stapels (100) das Anordnen von Beschleunigungsmesselementen (10_{A-C}) in einer gleichen Ausrichtung oder in unterschiedlichen Ausrichtungen um eine gemeinsame Längsachse (307) umfasst.

10. Verfahren nach Anspruch 1, wobei die Sensoreinheiten (1_{A-C}) eines temporären Stapels drei Beschleunigungsmesseinheiten und eine Hydrophoneinheit umfassen und der fertige Mehrelement-Faseroptiksensor (400) einen dreiachsigen Faseroptikbeschleunigungsmesser und ein Hydrophon umfasst.

11. Verfahren nach Anspruch 1, umfassend den Schritt des Anbringens der optischen Faser an Eintritts- und Austrittspositionen an jedem Sensor unter Verwendung von einem oder mehreren einer Gruppe von Anbringungsmitteln, umfassend einen Klebstoff, ein Klebeband, ein Haftmaterial, einen Clip, eine Klemme oder ein ähnliches Schnapp- oder Anbringungselement.

12. Stapel zur Verwendung bei der Fertigung eines Faseroptiksensors mit mehreren Sensorelementen, wobei der Stapel umfasst
- eine Baugruppe aus zwei oder mehr Sensorelementen (10_{A-C}) und mehreren Sensorhaltern (102_{C-J}),
**dadurch gekennzeichnet, dass**
- die Baugruppe auf einem Stapelfuß (101) aufgebaut ist und mit einer Klemme (112-116) zusammengeklemmt ist, wodurch die Verwendung durchgehender oder kontinuierlicher Elemente in dem Stapel vermieden wird.

13. Stapel nach Anspruch 12, wobei die Sensorelemente (10_{A-C}) und die Sensorhalter (102c-j) so ausgelegt sind, dass sie in einer Drehbewegung trennbar sind, um eine Zugbeanspruchung der aufgespulten Faser während des Auseinandernehmens des Stapels zu vermeiden.

14. Stapel nach Anspruch 12, umfassend geeignete Funktionsmerkmale an der mechanischen Grenzfläche zwischen zwei benachbarten Sensorhaltern und anderen Komponenten des Stapels, wobei die Grenzfläche beispielsweise in geeigneter Weise geformte Sensorschlitze (104) und entsprechende Zapfen (103) umfasst.

## Revendications

1. Procédé destiné à fournir un capteur à fibre optique (400) comprenant
- un assemblage de deux ou de plusieurs éléments de capteur (10_{A-C}),
- un enroulement d'une fibre optique continue (6) sur les deux ou plusieurs éléments de capteur (10_{A-C}) sur l'empilement de sorte à former de multiples unités de capteur (1_{A-C}, 2_{A}),
- un désassemblage de l'empilement temporaire (100) pour libérer les unités de capteur (1_{A-C}, 2_{A}) de l'empilement et pour permettre un réarrangement des unités de capteur (1_{A-C}, 2_{A}), et
- subséquemment un montage des unités de capteur (1_{A-C}, 2_{A}) dans une structure de montage (7) de sorte à fournir un capteur à fibre optique (400) incluant de multiples unités de capteur (1_{A-C}, 2_{A}), **caractérisé en ce que** l'assemblage des éléments de capteur comprend un assemblage d'un empilement temporaire (100) en construisant à partir d'un pied d'empilement (101) et en maintenant l'empilement ensemble par un dispositif de compression (101, 110, 112-114, 116-117), évitant ainsi l'utilisation d'éléments traversants ou continus dans l'empilement.

2. Procédé selon la revendication 1, comprenant un enveloppement de sections de la fibre optique (6) sur des porteurs de capteur (102_{C-J}), chaque porteur de capteur étant préalablement arrangé dans l'empilement (100) de sorte à séparer les éléments de capteur (10_{A-C}) et d'autres composants (3_{A}, 101, 110) de l'empilement (100) pendant l'enroulement de la fibre (6).

3. Procédé selon la revendication 1, comprenant une mise en rotation de l'empilement (100) autour d'un axe longitudinal tout en enroulant la fibre optique (6) sur les deux ou plusieurs éléments de capteur (10_{A-C}).

4. Procédé selon la revendication 1, comprenant une mise en rotation de l'unité d'alimentation de fibre (206) un certain nombre de rotations autour d'un axe longitudinal de l'empilement (100) tout en enroulant la fibre optique (6) sur les éléments de capteur (10_{A-C}).

5. Procédé selon la revendication 1, comprenant une translation d'une unité d'alimentation de fibre (206) en parallèle à un axe longitudinal (307) de l'empilement (100) tandis que l'empilement est mis en rotation autour de son axe longitudinal.

6. Procédé selon la revendication 1, comprenant l'étape de fourniture à la fibre optique (6) de réseaux de Bragg à fibres (FBG) de préférence avant l'enroulement sur l'empilement, et alternativement après l'étape d'enroulement.

7. Procédé selon la revendication 1, comprenant une fixation de la fibre optique (6) aux éléments de capteur (10_{A-C}) au niveau d'emplacements sélectionnés le long de la fibre optique (6).

8. Procédé selon la revendication 1, dans lequel l'assemblage d'un empilement temporaire (100) inclut un élément de référence (3_{A}), et dans lequel l'étape d'enroulement inclut un enroulement de la fibre optique (6) sur l'élément de référence (3_{A}).

9. Procédé selon la revendication 1, dans lequel l'assemblage de l'empilement (100) comprend un arrangement d'éléments d'accéléromètre (10_{A-C}) dans une même orientation ou dans différentes orientations autour d'un axe longitudinal commun (307).

10. Procédé selon la revendication 1 dans lequel les unités de capteur (1_{A-C}) d'un empilement temporaire comprennent trois unités d'accéléromètre et une unité d'hydrophone, et le capteur à fibre optique à éléments multiples fini (400) comprend un accéléromètre à fibre optique triaxial et un hydrophone.

11. Procédé selon la revendication 1, comprenant l'étape de fixation de la fibre optique à des positions d'entrée et de sortie sur chaque capteur, en utilisant un ou plusieurs d'un groupe de moyens de fixation comprenant une colle, une bande, un matériau adhérent, une broche, un serre-bride ou un élément de serrage ou de fixation similaire.

12. Empilement destiné à être utilisé dans la fabrication d'un capteur à fibre optique incluant de multiples éléments de capteur, l'empilement comprenant :
- un assemblage de deux ou de plusieurs éléments de capteur (10_{A-C}) et de plusieurs porteurs de capteur (102_{C-J}),
**caractérisé en ce que**
- l'assemblage est construit sur un pied d'empilement (101) et est retenu ensemble par un serre-bride (112-116) évitant ainsi l'utilisation d'éléments traversants ou continus dans l'empilement.

13. Empilement selon la revendication 12, dans lequel les éléments de capteur (10_{A-C}) et les porteurs de capteur (102_{C-J}) sont conçus de sorte à pouvoir être séparés dans un mouvement rotationnel pour éviter d'exercer une contrainte sur la fibre enroulée pendant un désassemblage de l'empilement.

14. Empilement selon la revendication 12, comprenant une fonctionnalité adaptée dans l'interface mécanique entre deux porteurs de capteur adjacents et d'autres composants de l'empilement, l'interface comprenant par exemple des fentes de capteur (104) de forme adaptée et des broches (103) correspondantes.
